# EUROPÄISCHE PATENTSCHRIFT

(11) **EP 2 269 285 B1**
(45) Veröffentlichungstag und Bekanntmachung des Hinweises auf die Patenterteilung: **08.11.2017**
(21) Anmeldenummer: 09732180.6
(22) Anmeldetag: 20.03.2009
(51) Int. Cl.: H02K 15/04, H02K 15/06

(54) **VERFAHREN UND VORRICHTUNG ZUR HERSTELLUNG EINER ELEKTRISCHEN WICKLUNG**
METHOD AND DEVICE FOR PRODUCING AN ELECTRICAL WINDING
PROCEDE ET DISPOSITIF DE FABRICATION D'UN BOBINAGE ELECTRIQUE

(30) Priorität: 16.04.2008 DE 102008018971
(43) Veröffentlichungstag der Anmeldung: 05.01.2011
(73) Patentinhaber: Robert Bosch GmbH, 70442 Stuttgart (DE); Rist Gmbh, 88255 Baienfurt (DE)
(72) Erfinder: OSSENKOPP, Stefan, 31177 Harsum (DE); HALDER, Hubert, Horgenzell 88263 (DE); WESSLE, Anton, 88284 Wolpertswende (DE)
(86) Internationale Anmeldenummer: PCT/EP2009/053328
(87) Internationale Veröffentlichungsnummer: WO 2009/127494

(56) Entgegenhaltungen:
- DE-T5-112004 000 904
- GB-A- 1 210 899
- JP-A- 56 012 845
- JP-A- 2005 051 985
- JP-A- 2005 073 446
- JP-A- 2006 230 077
- US-A1- 2005 133 655

## Beschreibung

### Stand der Technik

Die Erfindung geht aus von einem Verfahren und einer Vorrichtung zur Herstellung einer elektrischen Wicklung für eine elektrische Maschine nach der Gattung der unabhängigen Ansprüche.

Mit der CA 2290214 A1 ist eine Vorrichtung und ein Verfahren zum Bewickeln eines Ankers eines Elektromotors bekannt geworden, bei dem der Anker während des Wickelverfahrens festgehalten wird. Die Wickelvorrichtung weist einen Flyer-Arm auf, mittels dem der Wickeldraht um den feststehenden Rotor gewickelt wird. Bei solch einem Flyer-Wickelverfahren ist jedoch nachteilig, dass es zu Verdrillungen des Wickeldrahts kommt, wodurch sich der Nutfüllfaktor der elektrischen Maschine nur begrenzt erhöhen lässt. Werden beispielsweise für einen Stator mittels Flyer-Wickeln separate Einzelspulen gewickelt, führen die Verdrillungen des Wickeldrahts zu Verklemmen der Spulen beim Einzugsprozess in die Nuten des Stators.

Die US2005/133655A1, JP2005 073446 A, JP 2005 051985 A und JP 2006 230077 A zeigen Wickelverfahren für elektrische Maschinen, bei denen zuerst die elektrischen Wicklungen auf einem separaten Werkzeug gewickelt werden und anschließend auf Wicklungszähne der elektrischen Maschine aufgesetzt werden.

### Offenbarung der Erfindung

### Vorteile der Erfindung

Das erfindungsgemäße Verfahren und die erfindungsgemäße Vorrichtung zum Herstellen einer elektrischen Wicklung einer elektrischen Maschine mit den Merkmalen der unabhängigen Ansprüche haben demgegenüber den Vorteil, dass durch das axiale Verschieben einer einzelnen Wickelschablone gegenüber anderen benachbarten Wickelschablonen nacheinander mehrere Wicklungsspulen mittels eines oder mehrerer ununterbrochenen Wickeldrähte erzeugt werden kann. Dabei können sowohl die einzelnen Windungen auf einer Wickelschablone, als auch die Übergänge zwischen den unterschiedlichen Wickelschablonen kreuzungsfrei und verwindungsfrei gewickelt werden. Somit lässt sich eine Wicklungsphase mit mehreren Wicklungsspulen in einem Arbeitsgang sehr schnell wickeln, und dann auf ein Übersetzungswerkzeug umgesetzten, um anschließend mittels Einzugsverfahren in die Nuten eines Rotors oder eines Stators montiert werden zu können. Durch die parallele Anordnung der einzelnen Windungen und der Übergänge zwischen den einzelnen Wicklungsspulen ohne Verdrillungen und Drahtkreuzungen kann ein sehr hoher Nutfüllfaktor des Stators oder des Rotors erzeugt werden. Durch die Verwendung zwei gegenüberliegender Wickelköpfe mit darauf gelagerten Wickelschablonen kann eine optimale Drahtführung zwischen den einzelnen Wicklungsspulen erzielt werden. Durch die Umsetzmöglichkeit der Wickelschablone vom einen Wickelkopf zum zweiten Wickelkopf kann dabei der Wicklungsbeginn an dem einen oder an dem anderen axialen Ende der Wickelspule frei gewählt werden und dadurch derart optimiert werden, dass eine Wicklungsphase mit mehreren Wicklungsspulen in genau einer radialen Ebene angeordnet ist, wobei die Drähte zwischen den einzelnen Wicklungsspulen durchgängig und kreuzungsfrei gewickelt sind. Dabei sind die Wicklungsschablonen in zwei sich axial gegenüberliegenden Wickelköpfe gelagert, wobei durch das axiale Verschieben der einzelnen Wicklungsschablonen diese zum Bewickeln radial frei zugänglich sind

Durch die in den abhängigen Ansprüchen aufgeführten Maßnahmen sind vorteilhafte Weiterbildungen und Verbesserungen der in den abhängigen Ansprüchen angegebenen Ausführungen möglich. Werden mehrere Wickelschablonen in mindestens einem Wickelkopf gelagert, können dadurch entsprechend viele Wicklungsspulen schaltungsfrei miteinander verbunden werden. Durch die aufeinanderfolgende axiale Alleinstellung der einzelnen Schablonen können diese durch eine Rotationsbewegung ungestört mit dem Wicklungsdraht bewickelt werden, wobei die Wickelschablone von alle Seiten radial frei zugänglich ist. Dadurch können mehrere Wicklungsspulen einer Phase in kurzer Zeit kreuzungs- und verdrillungsfrei gewickelt werden.

In einer bevorzugten Ausführung kann die Wickelschablone von einem ersten Wickelkopf auf einen zweiten Wickelkopf umgesetzt werden. Das hat den Vorteil, dass jede Wickelschablone wahlweise an dem einen axialen Ende oder an dem gegenüberliegenden axialen Ende freistehend vom Wickelkopf wegragen kann. Wird beispielsweise eine Wickelschablone nach deren Bewickeln vom ersten Wickelkopf auf den zweiten Wickelkopf umgesetzt, kann der Übergang zur nächstens Wickelschablone besonders kurz und windungsfrei gestaltet werden, insbesondere wenn die nachfolgende Wickelschablone in entgegengesetzter Drehrichtung bewickelt wird.

Besonders günstig ist es, zum Wickeln der Wicklungsspulen die Wickelschablone gegenüber der feststehenden Drahtführung rotieren zu lassen. Dazu kann sich beispielsweise der Wickelkopf um eine zentrale Achse drehen. Alternativ könnte jedoch auch die Drahtführung um die Wickelschablone rotieren.

Durch die Ausbildung einer Wicklungsphase in einer radialen Ebene können besonders günstig mehrere Phasen axial nebeneinander auf das Übertragungswerkzeug angeordnet werden. Dabei wird jede Phase in einem Arbeitsgang gewickelt und anschließend auf das Übertragungswerkzeug aufgeschoben. Bei der Lagerung auf dem Übertragungsmagazin können dabei die einzelnen axial beabstandeten Wicklungsspulen in Tangentialrichtung überlappen. Dadurch kann eine optimale Anordnung der einzelnen Wicklungsspulen für das Einzugsverfahren in die Nuten des Stators oder Rotors gewährleistet werden.

Besonders vorteilhaft ist es, wenn an jeder Wicklungsschablone ein Abstreifer angeordnet ist, mit dem die Wicklungsspulen nach dem Fertigwickeln einer Wicklungsphase auf das Übertragungswerkzeug aufgeschoben werden können. Ebenso kann der Abstreifer während dem Bewickeln der einzelnen Wickelschablonen die einzelnen Drahtwindungen lückenlos axial aneinander schieben.

Dabei kann ein Wicklungsdraht oder mehrere Wicklungsdrähte (bis zu 12 Stück) zeitgleich auf die Wickelschablone aufgewickelt werden, wobei die Drehrichtung der einzelnen Wickelschablonen beliebig variiert werden kann.

Mit der erfindungsgemäßen Vorrichtung zum Herstellen einer elektrischen Wicklung können durch die axial bewegliche Anordnung der einzelnen Wickelschablonen diese besonders schnell und kreuzungsfrei gewickelt werden. Dabei können alle einzelnen Wickelschablonen motorisch axial gegenüber der übrigen Wickelschablonen verstellt werden, damit diese axial hervor ragende Wickelschablone in gleicher Weise bewickelt werden kann, wie eine einzige auf einem Wickelkopf montierte Wickelschablone.

Die Vorrichtung weist zwei gegenüberliegende Wickelköpfe auf, daher ist es von Vorteil, wenn ein Wicklungskopf axial gegenüber dem anderen derart verschiebbar ist, dass in radialer Richtung zwischen die beiden Wicklungsköpfe ein Übersetzungswerkzeug eingeschoben werden kann. Davor werden vorzugsweise alle Wickelschablonen auf einen einzigen Wicklungskopf umgesetzt, damit anschließend alle Wicklungsspulen einer Phase gleichzeitig auf das Übersetzungswerkzeug geschoben werden können. Das Übersetzungswerkzeug ist hierzu motorisch quer zur Axialrichtung der Wickelköpfe verstellbar angeordnet. Bevorzugt weisen die Wicklungsschablonen mehrere Elemente auf, mittels derer der Umfang der Wicklungsschablone durch das Verschieben der einzelnen Elemente variiert werden kann. Vorteilhaft können dabei die Abstreifer der Wickelschablonen an deren Umfang angepasst werden, um durch eine Axialverschiebung entlang der Wickelschablonen die Wicklungsspulen auf das Übertragungswerkzeug abzustreifen. Dadurch ist vorteilhaft das Übertragungswerkzeug gleichzeitig dazu geeignet, die Wicklungsspulen ohne weiteres Umsetzen direkt in die Nuten des Rotors oder des Stators einzuziehen.

Besonders vorteilhaft können die Wicklungsspulen auf die Wickelschablone gewickelt werden, indem sich die Wickelschablone dreht, während der Drahtführer den Wicklungsdraht langsam entlang einer Achse quer zur Drehbewegung der Wickelschablone bewegt. Dadurch können die Wicklungsdrähte ohne Verdrillungen und Überkreuzungen parallel zueinander auf der Wickelschablone angeordnet werden. Dies unterstützt auch die Verlegung der Drähte auf der Wickelschablone Dies gilt insbesondere für die Herstellung von Spulen, bei denen der Leiter aus mehreren parallel angeordneten Wickeldrähten besteht, wie dies bei der Auslegung von Niederspannungsmotoren der Fall ist.

Damit der Wicklungsdraht sauber und parallel auf die Wickelschablone aufgewickelt wird, ist es besonders günstig den Wicklungsdraht auf einer der Wickelschablone zugeordneten Klemmeinrichtung zu fixieren.

Das erfindungsgemäße Wickelverfahren eignet sich besonders für das Einziehen mehrerer Wicklungsphasen mit mehreren Wicklungsspulen in die Nuten der elektrischen Maschine. Dabei können vorteilhaft mehrere Wicklungsspulen derart auf dem Übersetzungswerkzeug angeordnet werden, dass alle Wicklungsspulen durch eine einzige Einzugsbewegung in den richtigen Nuten positioniert werden. Um die einzelnen Wicklungsphasen bezüglich des Rotors oder Stators lagerichtig auf dem Übersetzungswerkzeug anzuordnen, wird das Übersetzungswerkzeug vor dem Abstreifen der Wicklungsspulen um einen der elektrischen Auslegungen der elektrischen Maschinen entsprechenden Winkel verdreht. Damit werden die der Motorauslegung zugrundeliegende Wickelschritte realisiert.

In einer bevorzugten Ausgestaltung weist das Übersetzungswerkzeug ein integriertes Einzugswerkzeug auf, das die Windungen ohne weiteres Umsetzen direkt in die Nuten des Stators oder Rotors einzieht.

### Kurze Beschreibung der Zeichnungen

Ausführungsbeispiele der Erfindung sind in den Zeichnungen dargestellt und in der nachfolgenden Beschreibung näher erläutert. Es zeigen
Figur 1 eine Ansicht einer erfindungsgemäßen Wickelvorrichtung, und
Figur 2 und 3 die Anordnung der Wickelschablonen gemäß Figur 1 als Beispiele die das Verständnis der Erfindung erleichtern
Figuren 4 bis 7 verschiedene Verfahrensschritte des erfindungsgemäßen Wickelverfahren.

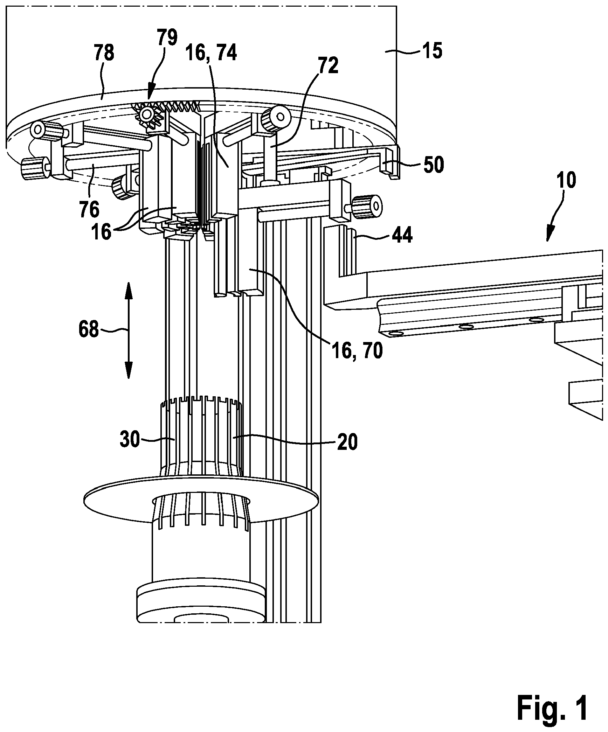

In Figur 1 ist eine Vorrichtung zum automatischen Wickeln einer elektrischen Maschine 12 dargestellt, bei der mehrere Wickelschablonen 16 auf einem ersten Wickelkopf 15 angeordnet sind. Die Wickelschablonen 16 weisen beispielsweise einen ovalen Umfang 11 auf, wobei der Umfang 11 der Wickelschablonen 16 mittels beweglicher Umfangselemente 13 variabel eingestellt werden kann. Hierzu sind die Umfangselemente 13 auf einer radialen Führungsschiene 76 angeordnet, auf der zusätzlich zu den Wickelschablonen 16 auch eine sogenannte Schaltverbindungsschablone 19 verschiebbar angeordnet ist, um die Länge eines Verbindungsdrahtes zwischen zwei Wickelschablonen 16 festzulegen. Zum Bewickeln der Wickelschablonen 16 weist die Vorrichtung 10 einen Drahtführer 44 auf, durch den ein oder mehrere Wicklungsdrähte 46 aus einem nicht dargestellten Vorratsbehälter geführt werden. Der Drahtführer 44 ist im Ausführungsbeispiel verschiebbar angeordnet, um die Verlegung auf der Wickelschablone sicherzustellen, wobei der Wicklungsdraht 46 vom Drahtführer 44 zur drehbar angeordneten Wickelschablone 16 verläuft. Zu Beginn des Wickelns der Windungen 48 auf die Wickelschablone 16, wird der Wicklungsdraht 46 auf der Wickelschablone 16 mittels einer Klemmvorrichtung 50 festgeklemmt. Eine erste Wickelschablone 70 wird dann mittels eines Schablonenhalters 72 axial gegenüber den anderen Wickelschablonen 16 verschoben. Dadurch überragt diese Wickelschablone 70 die anderen Wickelschablonen 16 in Axialrichtung 68 derart, dass die Wickelschablone 16 in radial allen Richtungen frei zugänglich ist. Nun wird diese erste Wickelschablone 70 in Rotation (insbesondere zusammen mit den anderen Wickelschablonen 16) versetzt, wodurch der Wicklungsdraht 46 in mehreren Windungen 48 um die Wickelschablone 70 aufgewickelt wird, und eine Wicklungsspule 32 bildet. Das ist möglich, weil die Wickelschablone 70 durch die axiale Verschiebung frei zugänglich ist. Die Rotation der ersten Wickelschablone 70 wird beispielsweise durch das Rotieren des ersten Wickelkopfs 15 um eine zentrale Rotationsachse 18 ausgebildete zentrale Mittelachse 22 durch den Mittelpunkt 21 bewirkt. Nachdem die erste Wicklungsspule 32 auf der ersten Wickelschablone 70 fertig gestellt ist, wird die Wickelschablone 70 wieder in Axialrichtung 68 zurückverschoben und eine zweite Wickelschablone 74 entlang der Axialrichtung 68 soweit verschoben, bis diese alle anderen Wickelschablonen 16 axial überragt. Wieder wird durch eine Rotationsbewegung der zweiten Wickelschablone 74 eine zweite Wicklungsspule 32 hergestellt, die beim Wickelschema dieses Ausführungsbeispiels schaltungsmittelfrei mit der ersten Wicklungsspule 32 verbunden ist. Im Ausführungsbeispiel sind sechs Wickelschablonen 16 angeordnet, die entsprechend der ersten und der zweiten Wickelschablone 70, 74 nacheinander jeweils einzeln zum Bewickeln in Axialrichtung 68 gegenüber der anderen Wickelschablonen 16 verschoben werden. Zur axialen Verstellung der einzelnen Wickelschablonen 16 werden die Schablonenhalter 72 motorisch entlang der Axialrichtung 68 verstellt. Hierzu ist beispielsweise jedem einzelnen Schablonenhalter 72 ein eigener Verstellantrieb 80 zugeordnet.

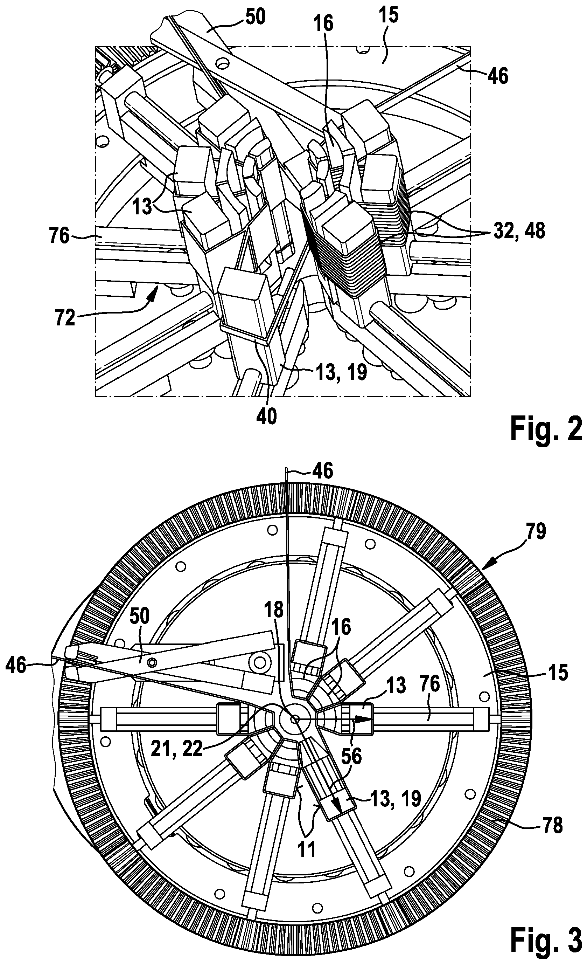

Mehrere durchgewickelte Wicklungsspulen 32 bilden zusammen eine Wicklungsphase 34, wie diese beispielsweise in Figur 2 dargestellt ist. Hierbei ist der eine Wicklungsdraht 46 bzw. mehrere parallele Wicklungsdrähte ohne Unterbrechung kreuzungs- und verwindungsfrei über mehrere Wicklungsspulen 32 hinweggewickelt. Nach Beendigung des Wickelvorgangs sind alle Wickelschablonen 16 wieder axial zurückverstellt, so dass alle Wicklungsspulen 32 in einer radialen Ebene quer zur Axialrichtung 68 angeordnet sind. Zwischen den Wicklungsspulen 32 ist hier die Schaltverbindungsschablone 19 angeordnet, über die eine vorgegebene Länge der Drahtverbindung zwischen zwei Gruppen von Wicklungsspulen 32 einer Wicklungsphase 34 vorgegeben ist. Bei einem Wickelschema mit einer Wicklungsphase 34 aus zwei mal drei Wicklungsspulen 32 ist die Schaltverbindungsschablone 19 nach der dritten Wicklungsspule 32 angeordnet. Grundsätzlich wäre auch eine Schaltverbindungsspule 19 nach den einzelnen Wicklungsspulen 32 denkbar, in Abhängigkeit von der gewählten Wicklungstopologie.

Figur 3 zeigt die Anordnung gemäß Figur 2 in einer Draufsicht, wobei erkennbar ist, dass der Radius 56 der Schaltverbindungsschablone 19 größer ist als die Radien 56 der Wickelschablonen 16. Hier ist ersichtlich, dass die Umfangselemente 13 sowohl der Wickelschablone 16 - als auch der Schaltverbindungsschablone 19 - jeweils individuell entlang der radialen Schienen 76 verstellt werden können. In der Klemmvorrichtung 50 wird der Wicklungsdraht 46 anfangs fixiert, und danach alle Wickelschablonen 16 einschließlich der Schaltverbindungsschablone 19 nacheinander durchgewickelt. Die Rotationsbewegung wird bei dieser Ausführung über eine drehbare Scheibe 78 des ersten Wickelkopfes 15 mittels einer Verzahnung 79 auf die Wickelschablonen 16 übertragen, wobei der Antrieb beispielsweise axial oder radial versetzt angeordnet ist. Es wäre auch ein zentraler Antrieb denkbar. In einer alternativen Ausführung kann auch der Drahtführer 44 um drehfest angeordnete Wickelschablonen 16 geführt werden, um die einzelnen Wicklungsspulen 32 zu wickeln.

Ist die Wicklungsphase 34 fertig gewickelt und die Wicklungsschablonen 16 alle in einer radialen Ebene angeordnet, wird ein Übersetzungswerkzeug 20 gegenüberliegend zu den Wickelschablonen 16 angeordnet und die Wicklungsspulen 32 von den Wickelschablonen 16 abgestreift und auf die Aufnahmen 28 des Übersetzungswerkzeugs 20 aufgeschoben. Auf diese Weise können nacheinander mehrere Wicklungsphasen 34 gewickelt und anschließend axial übereinander auf das Übersetzungswerkzeug 20 geschoben werden. Die Wicklungsspulen 32 werden anschließend beispielsweise direkt von dem Übersetzungswerkzeug 20 in axialer Richtung in axiale Nuten 62 eines Stators 60 eingezogen. In einer anderen Ausführung werden die Wicklungsspulen 32 von dem Übersetzungswerkzeug 20 erst auf ein Einzugswerkzeug 54 übergeben. In Fig. 1 ist das Übersetzungswerkzeug 20 drehbar gegenüber dem Wicklungskopf 15 angeordnet, sodass die verschiedenen Wicklungsphasen 34 auf unterschiedliche Fixierstifte 30 des Übersetzungswerkzeugs 20 aufgeschoben werden können.

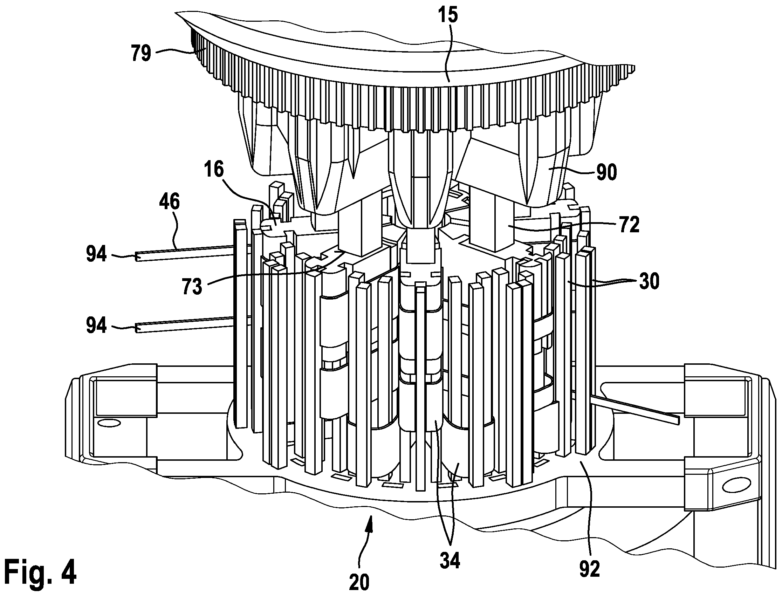

In Figur 4 ist anhand einer Ausführung einer erfindungsgemäßen Wickelvorrichtung 10 die Abstreifbewegung dargestellt, bei der die Wicklungsphase 34 von den Wickelschablonen 16 auf das Übersetzungswerkzeug 20 umgesetzt wird. Im Übertragungswerkzeug 20 sind bereits zwei Wicklungsphasen 34 aufgeschoben. Zur Übertragung der dritten Wicklungsphase 34 tauchen die Wickelschablonen 16 axial innerhalb der Fixierstifte 30 ein. Beispielsweise werden dann die Wicklungsspulen 32 mittels sogenannten Abstreifern 90 von den Wickelschablonen 16 auf die Fixierstifte 30 abgestreift. Danach werden alle Wickelschablonen 16 wieder axial aus dem Übertragungswerkzeug 20 zurückgeschoben, damit dieses aus der Wickelvorrichtung 10 entfernt werden kann.

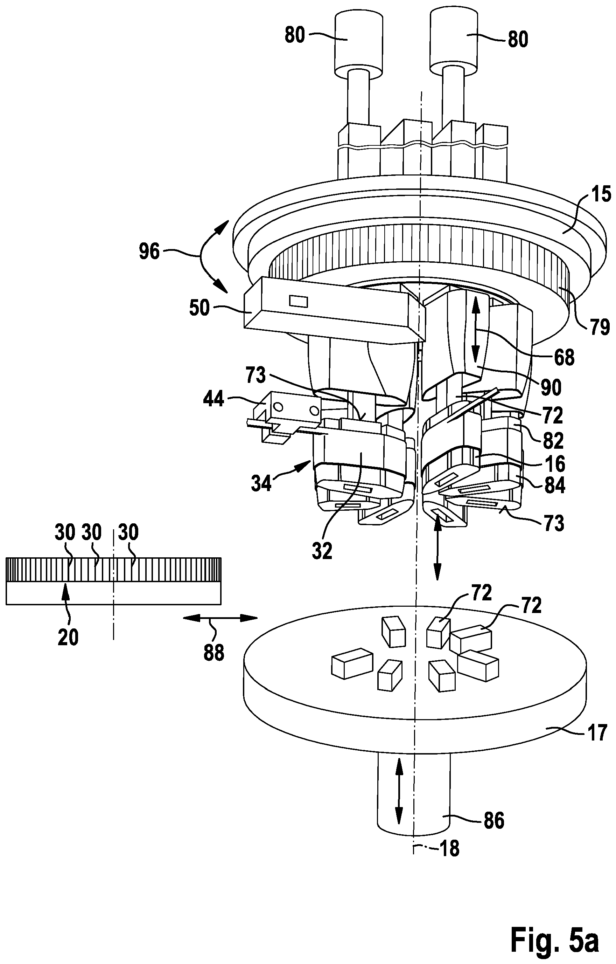

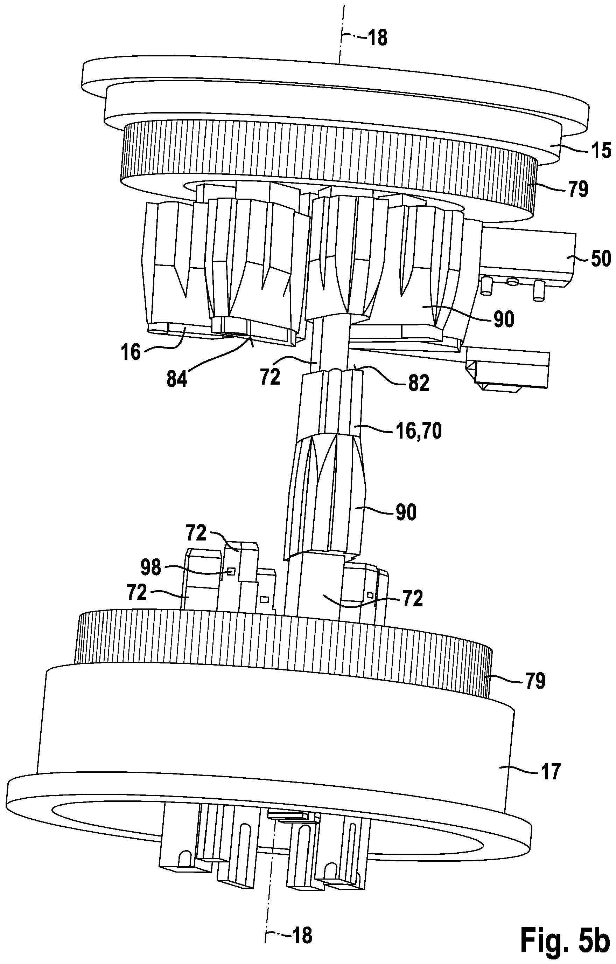

In Figur 5a ist die erfindungsgemäße Wickelvorrichtung 10 dargestellt, die zusätzlich zum ersten Wickelkopf 15 einen zweiten Wickelkopf 17 aufweist. Auf beiden axial einander gegenüberliegenden Wickelköpfe 15, 17 sind Schablonenhalter 72 für die Wickelschablonen 16 angeordnet. Die Wickelschablonen 16 und die Schaltverbindungsschablonen 19 sind wieder mittels beweglicher Umfangselemente 13 mit einem variabel einstellbaren Umfang 11 ausgerüstet. Die Wickelschablonen 16 sind hierbei derart ausgebildet, dass sie sowohl an ihren ersten axialen Enden 82 im ersten Wickelkopf 15, als auch an ihren zweiten axialen Enden 84 im zweiten Wickelkopf 15 gelagert werden können. Das bedeutet, dass jede einzelne Wickelschablone 16 und ggf. auch die Schaltverbindungsschablone 19 vom ersten Wickelkopf 15 in den zweiten Wickelkopf 17 umgesetzt, bzw. wieder zurückgesetzt werden kann. Dieser Umsetzvorgang der Wickelschablone 16 zwischen den beiden Wickelköpfen 15, 17 ist in Figur 5b dargestellt. Hierzu greifen die auf den Wickelköpfen 15, 17 angeordneten Schablonenhalter 72 beispielsweise in entsprechende Aufnahmen 73 der Wickelschablonen 16. Dazu wird beispielsweise eine erste Sperrvorrichtung 98 zwischen dem einen Schablonenhalter 72 des ersten Wickelkopfes 15 und der Schablone 16 gelöst, nachdem der Schablonenhalter 72 des anderen Wickelkopfes 17 mit der Schablone 16 verrastet wurde. Dadurch kann die einzelnen Schablone 16 wahlweise im oberen Wickelkopf 15 oder im unteren Wickelkopf 17 bewickelt werden. Entsprechend der Ausführung in Figur 1 sind die einzelnen Wickelschablonen 16 wiederum axial verschiebbar angeordnet, sodass eine einzelne Wickelschablone 16 in ihrer Wickelposition die anderen Wickelschablonen 16 axial überragt. Hierzu können die einzelnen Schablonenhalter 72 beispielsweise über einen Verstellantrieb 80 axial verstellt werden. Bei dieser Wickelvorrichtung 10 können die einzelnen Wickelschablonen 16 wiederum durch eine Rotation der Wickelschablone 16, vorzugsweise verursacht durch eine Rotation 96 der Wickelköpfe 15, 17, um die Rotationsachse 18 (z.B. über die Verzahnung 79) in Kombination mit der Drahtführung 44 bewickelt werden. Hierzu wird der Wicklungsdraht 46 an die Wickelschablone 16 angelegt und mit der Klemmvorrichtung 50 fixiert. In der Ausgangsposition befinden sich beispielsweise alle Wickelschablonen 16 am oberen Wickelkopf 15, wobei die erste zu bewickelnde Wickelschablone 70 zum Bewickeln in Axialrichtung 68 versetzt angeordnet ist. Nach dem Fertigstellen der ersten Wicklungsspule 32 wird dann die erste Wickelschablone 70 auf den gegenüberliegenden Wickelkopf 17 umgesetzt. Danach wird wiederum die zweite Wickelschablone 74 axial vom ersten Wickelkopf 15 ausgefahren, wobei dann der Wicklungsdraht 46 bei der Rotation die zweite Wickelschablone 74 durch einen Spalt zwischen den Wickelschablonen 16 am unteren Wickelkopf 17 und dem oberen Wickelkopf 15 geführt wird. Nach der Fertigstellung der zweiten Wicklungsspule 32 wird auch die zweite Wickelschablone 74 wieder auf den unteren Wickelkopf 17 umgesetzt, und so wird auch mit den weiteren Wickelschablonen 16 verfahren. Dieses wechselseitige Anschlagen der Wickelschablonen 16 (im Wickelkopf 15 und 17) bewirkt, dass der Wickeldraht 46 immer an den oberen bzw. den unteren Wickelschablonen 16 vorbeigeführt werden kann. Somit lässt sich eine Wickelphase 34 mit durchgewickeltem Wicklungsdraht 46 (einstückiger Draht) mit sehr kurzen Drahtübergängen zwischen den einzelnen Wicklungsspulen 32 herstellen.

Sind alle Wickelschablonen 16 bewickelt, werden beispielsweise alle Wickelschablonen 16 gemäß Figur 5a im ersten Wickelkopf 15 gelagert und der zweite Wickelkopf 17 wird gegenüber dem ersten Wickelkopf 15 in Axialrichtung 68 verfahren. Hierzu ist beispielsweise am zweiten Wickelkopf 17 eine Antriebsvorrichtung 86 angeordnet, die den Wickelkopf 17 axial soweit vom ersten Wickelkopf 15 entfernt, bis in radialer Richtung 88 das Übersetzungswerkzeug 20 gegenüberliegend zum ersten Wickelkopf 15 positioniert werden kann. An jeder Wickelschablone 16 ist jeweils ein Abstreifer 90 angeordnet, der ebenfalls axial verstellbar ist. Diese Abstreifer 90 werden im Ausführungsbeispiel entlang der Axialrichtung 68 nach unten bewegt, wodurch die Wicklungsspulen 32 der einzelnen Wickelschablonen 16 auf entsprechende Fixierstifte 30 des Übersetzungswerkzeugs 20 aufgeschoben werden. Nachdem diese erste Wicklungsphase 34 auf dem Übersetzungswerkzeug 20 gelagert ist, wird das Übersetzungswerkzeug 20 wieder radial von der Rotationsachse 18 entfernt und der zweite Wickelkopf 17 wieder axial zum ersten Wickelkopf 15 hin verschoben. Danach wird in gleicher Weise eine zweite oder eine dritte oder weitere Wicklungsphasen 34 gewickelt, wobei jede einzelne Wicklungsphase 34 in einem separaten Arbeitsgang auf das radial einführbare Übersetzungswerkzeug 20 abgestreift wird. Die Abstreifer 90 sind beispielsweise hülsenförmig ausgebildet, wobei deren Umfang dem variablen Umfang 11 der Wickelschablone 16 nachgebildet werden kann. Die Abstreifer 90 werden motorisch entlang den Schablonenhaltern 72 in Axialrichtung 68 verstellt, wobei die Abstreifer 90 nicht nur zum Abstreifen der Wicklungsphasen 34 verwendet werden können, sondern auch zum axialen Zusammenschieben der einzelnen Windungen 48 während dem Bewickeln der einzelnen Wickelschablonen 16. Bevorzugt sind an einem Wickelkopf 15 oder 17 alle Wickelschablonen 16 mit einem Abstreifer 90 ausgerüstet, damit alle Wicklungsspulen 32 gleichzeitig auf das Übersetzungswerkzeug 20 geschoben werden können. Die Abstreifer 90 weisen einen sich verjüngenden Bereich auf, der als Hilfsschablone zum Bewickeln der Wickelschablonen 16, 70 genutzt werden kann. Dabei gleitet der eine oder mehrere Wickeldrähte 46 über die Verjüngung axial auf die Wickelschablone 16, 70.

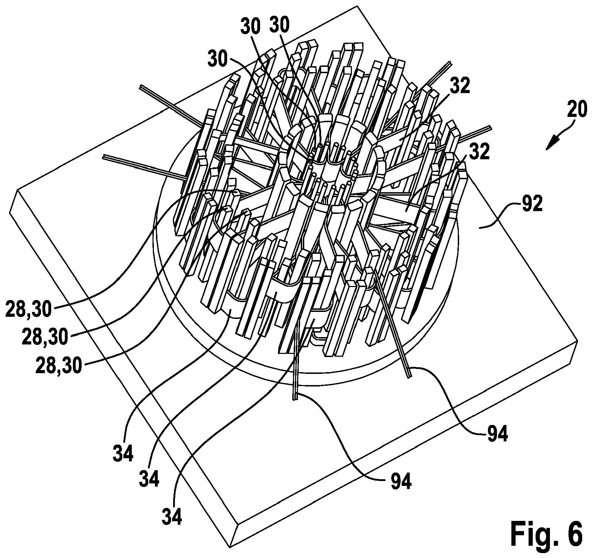

In Figur 6 ist ein Ausführungsbeispiel eines Übertragungswerkzeugs 20 dargestellt, das beispielsweise auf einer Trägerplatte 92 gelagert ist, die automatisiert in Radialrichtung 88 zur Rotationsachse 18 zwischen die beiden Wickelköpfe 15 und 17 geschoben werden kann. Am Übertragungswerkzeug 20 sind als Aufnahmen 28 eine Vielzahl von Fixierstiften 30 angeordnet, zwischen denen die einzelnen Wicklungsspulen 32 gelagert werden können. In Figur 6 sind beispielsweise drei Wicklungsphasen 34 axial benachbart angeordnet, wobei jede Wicklungsphase 34 mehrere- beispielsweise sechs - Wicklungsspulen 32 aufweist. Die einzelnen Wicklungsphasen 34 sind in einem Stück durchgewickelt, sodass jede Wicklungsphase 34 jeweils nur zwei Drahtenden 94 zur Bestromung aufweist. Das Übertragungswerkzeug 20 kann gleichzeitig als Einzugswerkzeug 54 ausgebildet sein, sodass die Wicklungsspulen 32 direkt vom Übersetzungswerkzeug 20 in entsprechende Nuten 62 eines Stators 60 eingezogen werden können. Alternativ können die Wicklungsphasen 34 aber auch auf ein speziell ausgebildetes Einzugswerkzeug 54 umgesetzt werden, das dann die Wicklungsspulen 32 in die Nuten 62 einzieht.

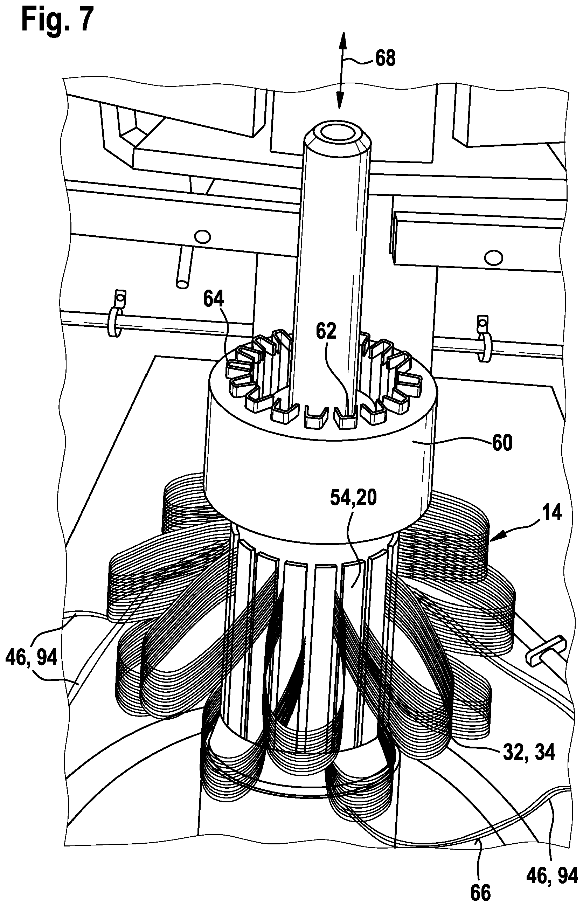

In Figur 7 ist ein Einziehverfahren dargestellt, bei dem die Wicklungsspulen 32 auf dem Übertragungswerkzeug 20 bzw. dem Einzugswerkzeug 54 angeordnet sind. Dabei wird das mit den Wicklungsspulen 32 bestückte Einzugswerkzeug 54 in den Stator 60 der elektrischen Maschine 12 derart eingeschoben, dass die Wicklungsspulen 32 in die entsprechende Nuten 62 des Stators 60 eingefügt werden. Die Nuten 62 werden im Ausführungsbeispiel zuvor mit einem Isolationselement 64 ausgekleidet, so dass zwischen den Wicklungsspulen 32 und dem Stator 60 zusätzlich zu einem Isolierlack 66 des Wicklungsdrahts 46 eine weitere Isolationsschicht 64 angebracht ist. Gemäß Figur 7 sind mehrere Wicklungsphasen 34 auf dem Einzugswerkzeug 54 angeordnet, die alle in einem Arbeitsschritt in die entsprechenden Nuten 62 des Stators 60 oder des Rotors eingezogen werden. Auf diese Weise ist ein sehr hoher Nutfüllfaktor der elektrischen Maschine 12 erzielbar.

Es sei angemerkt, dass hinsichtlich der in den Figuren in der Beschreibung gezeigten Ausführungsbeispiele vielfältige Kombinationsmöglichkeiten der einzelnen Merkmale untereinander möglich sind. So kann beispielsweise der erste und der zweite Wickelkopf 15, 17 zum Bewickeln der Wickelschablonen 16 motorisch drehbar ausgebildet sein oder nur einer der beiden Wickelköpfe 15, 17. Die Reihenfolge und Wickelrichtung der zu bewickelnden Wickelschablonen 16, sowie die Anordnung von Schaltverbindungsabschnitten zwischen den einzelnen Wicklungsspulen 32 kann an die konkreten Anforderungen der elektrischen Maschine angepasst werden. Das Übersetzungswerkzeug 20 und Einzugswerkzeug 54 können als separate oder kombinierte Baueinheiten ausgeführt werden. Ebenso kann entweder die Wickelschablone 16 axial gegen einen Anschlag des Übersetzungswerkzeugs 20, oder das Übersetzungswerkzeug 20 axial gegen einen Anschlag der Wickelschablone 16 verschoben werden, um die Windungen 48 abzustreifen. Bevorzugt wird das erfindungsgemäße Wickelverfahren für die Herstellung eines Stators 60 eines Elektromotors 12 durchgeführt, der beispielsweise zur Verstellung beweglicher Teile im Kraftfahrzeug verwendet wird. Insbesondere eignet sich ein solcher Stator mit hohem Nutfüllfaktor für einen bürstenlos kommutierten Elektromotor, wie er beispielsweise für elektrische Servolenkungen oder Gebläse im Kraftfahrzeug verwendet wird.

## Patentansprüche

1. Verfahren zur Herstellung einer elektrischen Wicklung (14) für eine elektrische Maschine (12) mit folgenden Schritten:
- Axiales Verschieben einer ersten Wickelschablone (16, 70) gegenüber weiteren auf mindestens einem Wicklungskopf (15) angeordneter Wickelschablonen (16) entlang einer zentralen Mittelachse (22) des Wickelkopfes (15), derart dass die erste Wickelschablone (16, 70) bezüglich einer Axialrichtung (68) senkrecht zur Wickelebene die weiteren Wickelschablonen (16) überragt
- Wickeln von mehreren Windungen (48) eines Wicklungsdrahtes (46) auf die erste Wickelschablone (16, 70) durch eine Rotationsbewegung zwischen einem den Wicklungsdraht (46) aufnehmenden Drahtführer (44) und der ersten Wickelschablone (16, 70)
- Axiales Zurückschieben der ersten bewickelten Wickelschablone (16, 70) und axiales Verschieben einer zweiten Wickelschablone (16, 74) gegenüber den weiteren Wickelschablonen (16), derart, dass die zweite Wickelschablone (16, 74) bezüglich der Axialrichtung (68) die weiteren Wickelschablonen (16) in Axialrichtung (68) überragt
- Wickeln von mehreren Windungen (48) des Wicklungsdrahtes (46) auf die zweite Wickelschablone (16, 74) durch eine Rotationsbewegung zwischen dem den Wicklungsdraht (46) aufnehmenden Drahtführer (44) und der zweiten Wickelschablone (16, 74)
- Anordnen eines Übersetzungswerkzeugs (20) axial gegenüberliegend zu den Wickelschablonen (16) und Abstreifen der auf die Wickelschablonen (16) gewickelten Windungen (48) auf das Übersetzungswerkzeug (20)
- Einziehen der Windungen (48) in Axialrichtung (68) in Nuten (62) eines Rotors oder Stators (60) der elektrischen Maschine (12),
- **dadurch gekennzeichnet, dass** die Wickelschablonen (16) in einem ersten und einem zweiten gegenüberliegenden Wickelkopf (17) gelagert werden, und abwechselnd Wickelschablonen (16) des oberen Wickelkopfes (15) und Wickelschablonen (16) des unteren Wickelkopfes (17) durchgewickelt werden.

2. Verfahren nach Anspruch 1, **dadurch gekennzeichnet, dass** nach einem axialen Zurückschieben der zweiten bewickelten Wickelschablone (16,74) nacheinander eine dritte, oder eine vierte, oder eine fünfte, oder eine sechste, oder eine n-te Wickelschablone (16) gegenüber den weiteren Wickelschablonen (16) axial Verschoben werden, derart dass diese Wickelschablonen (16) jeweils nacheinander bezüglich der Axialrichtung (68) die weiteren Wickelschablonen (16) überragen.

3. Verfahren nach einem der vorhergehenden Ansprüche **dadurch gekennzeichnet, dass** eine einzelne Wickelschablone (16) von dem ersten Wickelkopf (15) mit einem ersten freien axialen Ende (82) in den zweiten Wickelkopf (17) umgelagert wird, derart, das ein zweites freies axiales Ende (84) der Wickelschablone (16) sich von dem zweiten Wickelkopf (17) weg axial in Richtung des ersten Wickelkopfes (15) erstreckt.

4. Verfahren nach einem der vorhergehenden Ansprüche **dadurch gekennzeichnet, dass** zum Wickeln der Windungen (48) die Wickelschablone (16) eine Rotationsbewegung ausführt, insbesondere verursacht durch die Rotationsbewegung (96) des die Wickelschablone (16) lagernden Wickelkopfes (15, 17).

5. Verfahren nach einem der vorhergehenden Ansprüche, **dadurch gekennzeichnet, dass** mehrere Windungen (48) auf einer Wicklungsschablone (16) eine Wicklungsspule (32) bilden, und mehrere mittels eines Wicklungsdrahts (46) hergestellten Wicklungsspulen (32) schaltungsfrei und kreuzungsfrei miteinander verbunden sind, und insbesondere eine Wicklungsphase (34) bilden.

6. Verfahren nach einem der vorhergehenden Ansprüche **dadurch gekennzeichnet, dass** alle Wicklungsspulen (32) einer Wicklungsphase (34) auf dem Übertragungswerkzeug (20) in einer einzigen Ebene quer zur Axialrichtung (68) angeordnet werden.

7. Verfahren nach einem der vorhergehenden Ansprüche **dadurch gekennzeichnet, dass** die Wicklungsspulen (32) unterschiedlicher Wicklungsphasen (34) zeitlich nacheinander auf dem Übertragungswerkzeug (20) axial versetzt angeordnet werden, wobei sich insbesondere die Wicklungsspulen (32) der unterschiedlichen Wicklungsphasen (34) in Umfangsrichtung überschneiden.

8. Verfahren nach einem der vorhergehenden Ansprüche **dadurch gekennzeichnet, dass** jeder Wickelschablone (16) ein axial beweglicher Abstreifer (90) zugeordnet ist, der die Windungen (48) beim Bewickeln in Axialrichtung (68) zusammenschiebt und insbesondere später die gesamte Wicklungsphase (34) axial auf das Übertragungswerkzeug (20) abstreift.

9. Verfahren nach einem der vorhergehenden Ansprüche, **dadurch gekennzeichnet, dass** die einzelnen Wicklungsspulen (32) in unterschiedlicher Drehrichtung gewickelt werden, wobei insbesondere gleichzeitig mehrere parallel nebeneinander angeordnete Wickeldrähte (46) gewickelt werden.

10. Vorrichtung (10) zum Herstellung einer elektrischen Wicklung (14) für eine elektrische Maschine (12), insbesondere nach einem der vorhergehenden Ansprüche, mit einem drehbaren Wicklungskopf (15), auf dem mehrere Wickelschablonen (16) zum Wickeln von Wicklungsspulen (32) angeordnet sind, wobei die einzelnen Wickelschablonen (16) bezüglich einer parallel zur Mittelachse (22) des Wickelkopfes (15) erstreckenden Axialrichtung (68) quer zur Wickelebene gegeneinander verschiebbar angeordnet sind, **gekennzeichnet durch** einen zweiten drehbaren Wicklungskopf (17), in dem die Wicklungsschablonen (16) gehalten werden können, wobei zumindest einer der Wicklungsköpfe (15,17) axial verschiebbar gegenüber dem anderen Wickelkopf (17, 15) angeordnet ist

11. Vorrichtung (10) nach Anspruch 10, **dadurch gekennzeichnet, dass** die Wickelschablonen (16) - und insbesondere eine zusätzliche Schaltverbindungsschablone (19) - einen Umfang (11) aufweisen, der variabel einstellbar ist, und vorzugsweise ein in radialer Richtung (88) verschiebbares Umfangselement (13) aufweist.

12. Vorrichtung (10) nach einem der vorhergehenden Ansprüche, **dadurch gekennzeichnet, dass** die Wickelschablonen (16) an ihren beiden axialen Enden (82, 84) Aufnahmen (73) aufweisen, in die Schablonenhalter (72) der beiden Wickelköpfe (15, 17) einfügbar - und insbesondere verrastbar - sind.

13. Vorrichtung (10) nach einem der vorhergehenden Ansprüche, **dadurch gekennzeichnet, dass** ein radial zur Axialrichtung (68) verschiebbares Übersetzungswerkzeugs (20) angeordnet ist, auf das die Wicklungsspulen (32) mittels Abstreifern (90) aufschiebbar sind, die an den Wickelschablonen (16) angeordnet sind.

14. Vorrichtung (10) nach einem der vorhergehenden Ansprüche, **dadurch gekennzeichnet** das das Übersetzungswerkzeug (20) als Einzugswerkzeug (54) ausgebildet ist, das die Wicklungsspulen (32) in Nuten (62) der elektrischen Maschine (12) einzieht.

## Claims

1. Method for producing an electrical winding (14) for an electrical machine (12), comprising the following steps:
- axially displacing a first former (16, 70) in relation to further formers (16), which are arranged on at least one end winding (15), along a central centre axis (22) of the end winding (15) in such a way that the first former (16, 70) protrudes beyond the further formers (16) with respect to an axial direction (68) perpendicular to the winding plane,
- winding a plurality of turns (48) of a winding wire (46) onto the first former (16, 70) by virtue of a rotational movement between a wire guide (44), which accommodates the winding wire (46), and the first former (16, 70),
- axially retracting the first wound former (16, 70) and axially displacing a second former (16, 74) in relation to the further formers (16) in such a way that the second former (16, 74) protrudes beyond the further formers (16) in the axial direction (68) with respect to the axial direction (68),
- winding a plurality of turns (48) of the winding wire (46) onto the second former (16, 74) by virtue of a rotational movement between the wire guide (44), which accommodates the winding wire (46), and the second former (16, 74),
- arranging a transmission tool (20) axially opposite the formers (16) and scraping the turns (48) which are wound onto the formers (16) onto the transmission tool (20),
- pulling the turns (48) in the axial direction (68) into slots (62) of a rotor or stator (60) of the electrical machine (12),
- **characterized in that** the formers (16) are mounted in a first and a second opposite end winding (17), and wire is wound through formers (16) of the upper end winding (15) and formers (16) of the lower end winding (17) alternately.

2. Method according to Claim 1, **characterized in that**, after axially retracting the second wound former (16, 74), a third, or a fourth, or a fifth, or a sixth, or an nth former (16) is axially displaced in relation to the further formers (16) in succession in such a way that these formers (16) each project beyond the further formers (16) with respect to the axial direction (68) in succession.

3. Method according to either of the preceding claims, **characterized in that** a single former (16) is repositioned from the first end winding (15) by way of a first free axial end (82) to the second end winding (17) in such a way that a second free axial end (84) of the former (16) extends away from the second end winding (17) axially in the direction of the first end winding (15).

4. Method according to one of the preceding claims, **characterized in that**, for the purpose of winding the turns (48), the former (16) executes a rotational movement, in particular caused by the rotational movement (96) of the end winding (15, 17) which supports the former (16).

5. Method according to one of the preceding claims, **characterized in that** a plurality of turns (48) on a former (16) form a winding coil (32), and a plurality of winding coils (32), which are produced by means of a winding wire (46), are connected to one another without wiring and without crossing, and in particular form a winding phase (34).

6. Method according to one of the preceding claims, **characterized in that** all of the winding coils (32) of a winding phase (34) are arranged on the transfer tool (20) in a single plane transverse to the axial direction (68).

7. Method according to one of the preceding claims, **characterized in that** the winding coils (32) of different winding phases (34) are arranged axially offset on the transfer tool (20) successively in time, wherein, in particular, the winding coils (32) of the different winding phases (34) overlap in the circumferential direction.

8. Method according to one of the preceding claims, **characterized in that** each former (16) has an associated axially movable scraper (90) which jointly pushes the turns (48) in the axial direction (68) during winding and, in particular, later scrapes the entire winding phase (34) axially onto the transfer tool (20).

9. Method according to one of the preceding claims, **characterized in that** the individual winding coils (32) are wound in different rotation directions, wherein, in particular, a plurality of winding wires (46) which are arranged parallel one next to the other are wound at the same time.

10. Apparatus (10) for producing an electrical winding (14) for an electrical machine (12), in particular according to one of the preceding claims, comprising a rotatable end winding (15) on which a plurality of formers (16) for winding winding coils (32) are arranged, wherein the individual formers (16) are arranged such that they can be displaced in relation to one another transverse to the winding plane with respect to an axial direction (68) which extends parallel to the centre axis (22) of the end winding (15), **characterized by** a second rotatable end winding (17) in which the formers (16) can be held, wherein at least one of the end windings (15, 17) is arranged such that it can be axially displaced in relation to the other end winding (17, 15).

11. Apparatus (10) according to Claim 10, **characterized in that** the formers (16) - and in particular an additional interconnection former (19) - have a circumference (11) which is variably adjustable and preferably has a circumferential element (13) which can be displaced in the radial direction (88).

12. Apparatus (10) according to one of the preceding claims, **characterized in that** the formers (16) have, at their two axial ends (82, 84), receptacles (73) into which former holders (72) of the two end windings (15, 17) can be inserted - and in particular can be locked.

13. Apparatus (10) according to one of the preceding claims, **characterized in that** a transmission tool (20) which can be displaced radially relative to the axial direction (68) is provided, it being possible for the winding coils (32) to be pushed onto the said transmission tool by means of scrapers (90) which are arranged on the formers (16).

14. Apparatus (10) according to one of the preceding claims, **characterized in** the the transmission tool (20) is in the form of a pull-in tool (54) which pulls the winding coils (32) into slots (62) of the electrical machine (12).

## Revendications

1. Procédé de fabrication d'un bobinage électrique (14) pour une machine électrique (12), comprenant les étapes suivantes :
- décalage axial d'un premier gabarit de bobinage (16, 70) par rapport à d'autres gabarits de bobinage (16) disposés sur au moins une tête de bobinage (15) le long d'un axe médian central (22) de la tête de bobinage (15), de telle sorte que le premier gabarit de bobinage (16, 70) fait saillie perpendiculairement au plan de bobinage des autres gabarits de bobinage (16) par rapport à une direction axiale (68),
- bobinage de plusieurs spires (48) d'un fil de bobinage (46) sur le premier gabarit de bobinage (16, 70) par un mouvement de rotation entre un guide-fil (44) qui accueille le fil de bobinage (46) et le premier gabarit de bobinage (16, 70),
- rétraction axiale du premier gabarit de bobinage (16, 70) bobiné et déplacement axial d'un deuxième gabarit de bobinage (16, 74) par rapport aux autres gabarits de bobinage (16) de telle sorte que le deuxième gabarit de bobinage (16, 74) fait saillie dans le sens axial (68) des autres gabarits de bobinage (16) en référence au sens axial (68),
- bobinage de plusieurs spires (48) du fil de bobinage (46) sur le deuxième gabarit de bobinage (16, 74) par un mouvement de rotation entre le guide-fil (44) qui accueille le fil de bobinage (46) et le deuxième gabarit de bobinage (16, 74),
- arrangement d'un outil de translation (20) dans le sens axial à l'opposé des gabarits de bobinage (16) et stripage des spires (48) bobinées sur les gabarits de bobinage (16) sur l'outil de translation (20),
- rentrage des spires (48) dans le sens axial (68) dans les rainures (62) d'un rotor ou d'un stator (60) de la machine électrique (12),
- **caractérisé en ce que** les gabarits de bobinage (16) sont montés dans une première et une deuxième tête de bobinage (17) opposées et les gabarits de bobinage (16) de la tête de bobinage supérieure (15) et les gabarits de bobinage (16) de la tête de bobinage supérieure (17) sont bobinés en alternance.

2. Procédé selon la revendication 1, **caractérisé en ce qu'**après une rétraction axiale du deuxième gabarit de bobinage (16, 74) bobiné, un troisième, ou un quatrième, ou un cinquième, ou un sixième, ou un n-ième gabarit de bobinage (16) est décalé dans le sens axial par rapport aux autres gabarits de bobinage (16), de telle sorte que ces gabarits de bobinage (16) font saillies des autres gabarits de bobinage (16) respectivement les uns après les autres en référence au sens axial (68).

3. Procédé selon l'une des revendications précédentes, **caractérisé en ce qu'**un gabarit de bobinage (16) individuel est transposé de la première tête de bobinage (15) avec une première extrémité axiale libre (82) dans la deuxième tête de bobinage (17) de telle sorte qu'une deuxième extrémité axiale libre (84) du gabarit de bobinage (16) s'éloigne de la deuxième tête de bobinage (17) dans le sens axial en direction de la première tête de bobinage (15).

4. Procédé selon l'une des revendications précédentes, **caractérisé en ce que** le gabarit de bobinage (16) exécute un mouvement de rotation pour le bobinage des spires (48), notamment causé par le mouvement de rotation (96) de la tête de bobinage (15, 17) qui supporte le gabarit de bobinage (16).

5. Procédé selon l'une des revendications précédentes, **caractérisé en ce que** plusieurs spires (48) sur un gabarit de bobinage (16) forment une bobine bobinée (32) et plusieurs bobines bobinées (32) produites au moyen d'un fil de bobinage (46) sont reliées entre elles sans commutation et sans se croiser, et forment notamment une phase de bobinage (34).

6. Procédé selon l'une des revendications précédentes, **caractérisé en ce que** toutes les bobines bobinées (32) d'une phase de bobinage (34) sont disposées sur l'outil de transfert (20) dans un plan unique transversalement par rapport à la direction axiale (68).

7. Procédé selon l'une des revendications précédentes, **caractérisé en ce que** les bobines bobinées (32) de différentes phases de bobinage (34) sont disposées successivement sur l'outil de transfert (20) en étant décalées dans le sens axial, les bobines bobinées (32) des différentes phases de bobinage (34) se chevauchant notamment dans le sens de la circonférence.

8. Procédé selon l'une des revendications précédentes, **caractérisé en ce qu'**un stripeur (90) mobile dans le sens axial est associé à chaque gabarit de bobinage (16), lequel pousse les spires (48) les unes contre les autres dans le sens axial (68) lors du bobinage et effectue, notamment plus tard, un stripage axial de l'ensemble de la phase de bobinage (34) sur l'outil de transfert (20).

9. Procédé selon l'une des revendications précédentes, **caractérisé en ce que** les bobines bobinées (32) individuelles sont bobinées dans des sens de rotation différents, plusieurs fils de bobinage (46) disposés parallèlement entre eux étant notamment bobinés simultanément.

10. Dispositif (10) de fabrication d'un bobinage électrique (14) pour une machine électrique (12), notamment selon l'une des revendications précédentes, comprenant une tête de bobinage (15) rotative sur laquelle sont disposés plusieurs gabarits de bobinage (16) destinés à bobiner des bobines bobinées (32), les gabarits de bobinage (16) individuels étant disposés de manière à pouvoir être décalés les uns par rapport aux autres transversalement au plan de bobinage par rapport à une direction axiale (68) qui s'étend parallèlement à l'axe médian central (22) de la tête de bobinage (15), **caractérisé par** une deuxième tête de bobinage (17) rotative dans laquelle peuvent être maintenus les gabarits de bobinage (16), au moins l'une des têtes de bobinage (15, 17) étant disposée de manière à pouvoir être décalée dans le sens axial par rapport à l'autre tête de bobinage (17, 15).

11. Dispositif (10) selon la revendication 10, **caractérisé en ce que** les gabarits de bobinage (16), et notamment un gabarit de liaison commutée (19), possèdent une circonférence (11) qui est réglable de façon variable, et possèdent de préférence un élément circonférentiel (13) pouvant être décalé dans le sens radial (88).

12. Dispositif (10) selon l'une des revendications précédentes, **caractérisé en ce que** les gabarits de bobinage (16) possèdent à leurs deux extrémités axiales (82, 84) des logements (73) dans lesquels peuvent être insérés, et notamment enclipsés, les porte-gabarits (72) des deux têtes de bobinage (15, 17).

13. Dispositif (10) selon l'une des revendications précédentes, **caractérisé en ce qu'**un outil de translation (20) est disposé de manière à pouvoir être décalé dans le sens radial par rapport à la direction axiale (68), sur lequel les bobines bobinées (32) peuvent être glissées au moyen de stripeurs (90) qui sont disposés sur les gabarits de bobinage (16).

14. Dispositif (10) selon l'une des revendications précédentes, caractérisé en ce le l'outil de translation (20) est réalisé sous la forme d'un outil de rentrage (54) qui fait rentrer les bobines bobinées (32) dans des rainures (62) de la machine électrique (12).
